# EUROPÄISCHE PATENTSCHRIFT

(11) **EP 2 542 327 B1**
(45) Veröffentlichungstag und Bekanntmachung des Hinweises auf die Patenterteilung: **12.10.2016**
(21) Anmeldenummer: 11713236.5
(22) Anmeldetag: 01.04.2011
(51) Int. Cl.: B01D 41/04, B01D 46/42, B01D 46/24, B01D 46/00, F01N 3/022

(54) **VERFAHREN ZUM REINIGEN VON FILTERN**
METHOD FOR CLEANING FILTERS
PROCÉDÉ POUR NETTOYER DES FILTRES

(30) Priorität: 22.11.2010 DE 102010060716; 14.10.2010 DE 102010048280; 10.09.2010 DE 102010044929; 10.08.2010 DE 102010036928; 22.04.2010 DE 102010017834; 03.04.2010 DE 102010013800
(43) Veröffentlichungstag der Anmeldung: 09.01.2013
(73) Patentinhaber: KIPP, Jens-Werner, 33659 Bielefeld (DE)
(72) Erfinder: KIPP, Jens-Werner, 33659 Bielefeld (DE)
(74) Vertreter: Wickord, Wiro
(86) Internationale Anmeldenummer: PCT/EP2011/055110
(87) Internationale Veröffentlichungsnummer: WO 2011/121114

(56) Entgegenhaltungen:
- EP-B1- 1 501 655
- WO-A1-2008/054262
- DE-A1- 19 632 970
- DE-A1-102006 047 742
- US-A1- 2004 103 788

## Beschreibung

Die Erfindung betrifft ein Verfahren zum Reinigen von Filtern, die als Festkörper mit Poren und/oder zur Oberfläche offenen Kanälen ausgebildet sind, durch Abstrahlen mit einem Strahlmedium, sowie eine Vorrichtung zur Durchführung dieses Verfahrens.

Insbesondere befasst sich die Erfindung mit der Reinigung von Partikelfiltern, beispielsweise Abgasfilten für Dieselaggregate von Kraftfahrzeugen, Schiffen und dergleichen. Um die Nutzungsdauer solcher Filter zu verlängern und dennoch die einschlägigen Abgasnormen einzuhalten, sollten diese hochbelasteten Filter von Zeit zu Zeit ausgebaut und durch Abstrahlen gereinigt und regeneriert werden. Bisher wird zu diesem Zweck zumeist ein Hochdruckreiniger eingesetzt, mit dem der Filter mit Wasser abgestrahlt wird. Nachteilig ist dabei jedoch die hohe Umweltbelastung durch den Anfall großer Mengen von mit Schadstoffen verunreinigtem Wasser. Da die von dem Filter abgelösten Verunreinigungen als Staub oder Schlamm zurückspritzen, ist das herkömmliche Verfahren auch mit einer hohen Gesundheitsbelastung für das Personal verbunden. Weiterhin ist es bekannt, die Verunreinigungen bei hoher Temperatur zu verbrennen und die Asche mit Druckluft auszublasen. Beide bekannten Verfahren haben den Nachteil, dass sie die katalytischen Eigenschaften des Filters beeinträchtigen.

Aus der US 2004/103788 A1 ist eine Vorrichtung zur Reinigung von Filtern, insbesondere Dieselpartikelfiltern bekannt. Die Vorrichtung sieht insbesondere die Verwendung eines so beaufschlagten Fluids vor, welches durch eine beweglich angeordnete Düse ausströmt. Zum Bewegen der Düse ist ein Aktuator mit einer Ansteuereinheit vorgesehen.

Aus der WO 2008/054262 A1 ist eine Reinigungsvorrichtung für einen Dieselpartikelfilter bekannt, welche eine Vakuumpumpe vorsieht und mithilfe der Vakuumpumpe ein Reinigungsmedium zum Entfernen einer Verschmutzung durch den Filter hindurchsaugt.

Aus der DE 10 2006 047 742 A1 ist ein Verfahren zur Dekontamination einer Oberfläche mit Trockenschnee bekannt. An der Oberfläche ist hierbei eine die Dekontamination aufweisende Funktionsschicht mit einer geringen Wärmeleitfähigkeit gebildet.

Aus der DE 196 32 970 A1 ist eine Reinigungsvorrichtung für Filter und Filtermatten bekannt. Die Reinigungsvorrichtung umfasst eine entlang des Filters beziehungsweise der Filtermatte bewegliche Luftstrahldüse.

Aus der EP 1 501 655 B1 sind ein Strahlverfahren und eine Strahlvorrichtung bekannt, welche ausgebildet sind zum Beschleunigen eines Strahlmediums auf zumindest annähernd Schallgeschwindigkeit.

Aufgabe der Erfindung ist es, ein Verfahren anzugeben, das eine effiziente und schonende Reinigung der Filter bei verminderter Umwelt- und Gesundheitsbelastung ermöglicht.

Zur Lösung der Aufgabe weist die Erfindung die Merkmale des Patentanspruchs 1 auf.

Bei dem Strahlmedium handelt es sich um ein Gas, beispielsweise Druckluft oder Stickstoff, das entweder keine festen oder flüssigen Strahlmittel enthält oder in dem als Strahlmittel feine Tröpfchen oder Partikel einer leichtflüchtigen Substanz suspendiert sind. Geringe Beimischungen schwerer flüchtiger Substanzen mit einem Siedepunkt von mehr als 140 °C sind nicht generell ausgeschlossen, jedoch enthält das Strahlmedium vorzugweise nur Substanzen, deren Siedepunkt nicht mehr als 140 °C beträgt. Dieses Strahlmedium kann mit einer geeigneten Strahldüse, beispielsweise einer Laval-Düse, auf Schallgeschwindigkeit oder Überschallgeschwindigkeit beschleunigt werden. Dadurch wird eine besonders intensive und dennoch schonende Reinigungswirkung erzielt, und der Strahl dringt tief in die Poren und Kanäle des Filters ein, so dass der Reinigungseffekt nicht auf die Oberfläche beschränkt bleibt. Über die Saugöffnung wird nicht nur das Strahlmittel abgesaugt, sondern auch Umgebungsluft angesaugt. Das gewährleistet einen wirksamen Abtransport der Verunreinigungen und verhindert, dass diese Verunreinigungen unkontrolliert in die Umgebung gelangen.

Vorteilhafte Weiterbildungen und Ausgestaltungen der Erfindung sind in den Unteransprüchen angegeben.

Vorzugsweise hat das Strahlmedium bzw. das Gemisch aus Strahlmedium und Strahlmittel beim Verlassen der Strahldüse eine mittlere Temperatur von weniger als 0 °C. Durch die niedrige Temperatur des Strahlmediums wird ein Versprödungseffekt erzielt, der die Ablösung der Verunreinigungen von dem Filtermaterial begünstigt.

In einer Ausführungsform ist das Strahlmedium Stickstoffgas, das durch Entspannung von flüssigem Stickstoff gewonnen wird und deshalb eine niedrige Temperatur hat.

In einer besonders bevorzugten Ausführungsform wird die tiefe Temperatur dadurch erreicht, dass dem gasförmigen Strahlmedium (z. B. Druckluft) Trockeneis oder Trockenschnee als Strahlmittel zugesetzt wird. Besonders zweckmäßig ist dazu eine Strahldüse, in der der Trockenschnee an Ort und Stelle durch Entspannung von flüssigem CO₂ erzeugt wird. Ein Beispiel einer solchen Strahldüse ist in EP 1 501 655 B1 beschrieben.

Um das Strahlmittel und die Verunreinigungen wirksam abzusaugen, ist es zweckmäßig, insbesondere bei geschlossenen Filtersystemen mit nur an den entgegengesetzten Enden offenen Filtern, wenn die Saugdüse direkt an ein offenes Ende angesetzt wird. Die Saugdüse sollte dann vorzugsweise einen Unterdruck von wenigstens 1 kPa (0,01 bar) weiter vorzugsweise wenigstens 5 oder 10 kPa erzeugen.

Bei Filtern mit porösem Filtermaterial ist außerdem das Strahlmittel porengängig, sei es dadurch, dass es beim Auftreffen auf das Filtermaterial schnell verdampft oder sublimiert und dann durch die Poren abgesaugt werden kann, und/oder dadurch, dass die Partikel des Strahlmittels so klein sind (oder durch Verdampfung oder Sublimation so klein werden), dass sie durch die Poren hindurchgehen. Da als Strahlmittel Trockenschnee verwendet wird, der mit einer Strahldüse gemäß EP 1 501 655 B1 er- zeugt wird, lässt sich die Menge an eingestrahltem Trockenschnee und die Größe der Trockenschneepartikel dadurch steuern, dass der Druck der Druckluft und der Durchsatz an flüssigem CO₂ geeignet eingestellt werden, und/oder durch geeignete Gestaltung und Dimensionierung des Entspannungsraums, in dem sich das flüssige CO₂ entspannt. Beispiele hierfür werden auch in EP 1 765 551 B1 und WO 2005/005377A1 gegeben. Generell sollten die Verfahrensparameter so gewählt werden, dass die pro Zeiteinheit aus der Düse zugeführte Menge an Strahlmittel kleiner ist als die Menge an Strahlmittel, die pro Zeiteinheit durch die Poren des Filtermaterials hindurchtreten oder durch die Gasströmung wieder zur Einstrahlseite hin ausgeworfen werden kann. Auf diese Weise wird verhindert, dass das Strahlmittel den Filter verstopft.

Mit Hilfe eines Manipulatorsystems wird eine Relativbewegung zwischen Strahldüse und Filter erzeugt, so dass der Strahl auf alle gewünschten Oberflächenbereiche des Filters gerichtet werden kann. Der Bewegungsablauf wird je nach Geometrie und Beschaffenheit des zu reinigenden Filters gesteuert.

Abgas-Partikelfilter haben zumeist eine allgemein zylindrische Form. Bei Edelstählfiltern ist die Mantelfläche des Zylinders durch Kanäle durchbrochen. Das Manipulatorsystem kann dann so gestaltet sein, dass der Filter um seine Längsachse gedreht und gleichzeitig in Axialrichtung relativ zur ortsfesten Düse bewegt wird. Wenn der Filter die Form eines Hohlzylinders hat, kann in entsprechender Weise auch eine Reinigung von der inneren Umfangsfläche her erfolgen.

Andere Filtertypen, beispielsweise die meisten Keramikfilter, weisen eine nicht durchbrochene Mantelfläche auf, und Gaskanäle verlaufen von den beiden Stirnflächen des Filters axial in das Innere des Filterkörpers, wo die von entgegengesetzten Stirnflächen her eintretenden Gaskanale einander überlappen, jedoch zumeist durch Wände aus dem porösen Keramikmaterial voneinander getrennt bleiben. Zur Reinigung solcher Filter kann das Manipulatorsystem mindestens an einem Ende des Filters eine auf die dortige Stirnfläche gerichtete radial bewegliche Düse haben. Durch Überlagerung der radialen Bewegung der Düse mit einer Drehung des Filters um seine Längsachse kann dann die gesamte Stirnfläche abgereinigt werden, wobei der auf hohe Geschwindigkeit beschleunigte Strahl des Strahlmediums tief in die Gaskanäle eindringt. Wenn eine Düse nur an einem Ende des Filters vorgesehen ist, kann das Manipulatorsystem so ausgebildet sein, dass der Filter um 180° um die Querachse gedreht werden kann, um die entgegengesetzte Stirnfläche zu reinigen.

Natürlich sind auch Manipulatorsysteme möglich, bei denen nur die Düse relativ zum feststehenden Filter bewegt wird.

Das Manipulatorsystem weist eine programmierbare Steuereinrichtung auf, mit der sich der Bewegungsablauf programmieren lässt. In dieser Steuereinrichtung können mehrere Programme für unterschiedliche Filtertypen gespeichert sein, so dass es genügt, den jeweiligen Filtertyp oder einige wenige kennzeichnende Parameter des Filters einzugeben, und der Reinigungsvorgang im übrigen automatisch ablaufen kann. Wahlweise kann die Steuereinrichtung auch die Möglichkeit bieten, die Geschwindigkeit der Bewegungsabläufe und damit die Dauer und Intensität des Reinigungsvorgangs je nach Verschmutzungsgrad oder Materialbeschaffenheit des Filters zu variieren.

Im folgenden werden Ausführungsbeispiele der Erfindung anhand der Zeichnung näher erläutert.

Es zeigen:
- Fig. 1: einen schematischen axialen Schnitt durch eine Vorrichtung zur Durchführung des erfindungsgemäßen Verfahrens;
- Fig. 2: die Vorrichtung nach Fig. 1 in einem schematischen Querschnitt;
- Fig. 3: einen axialen Schnitt durch eine Vorrichtung gemäß einem abgewandelten Ausführungsbeispiel;
- Fig. 4: eine Skizze einer Vorrichtung gemäß einem weiteren Ausführungsbeispiel;
- Fig. 5: eine abgewandelte Ausführungsform der Vorrichtung nach Fig. 4; und
- Fig. 6: eine vergrößerte Schnittdarstellung eines Teils eines Keramikfilters.

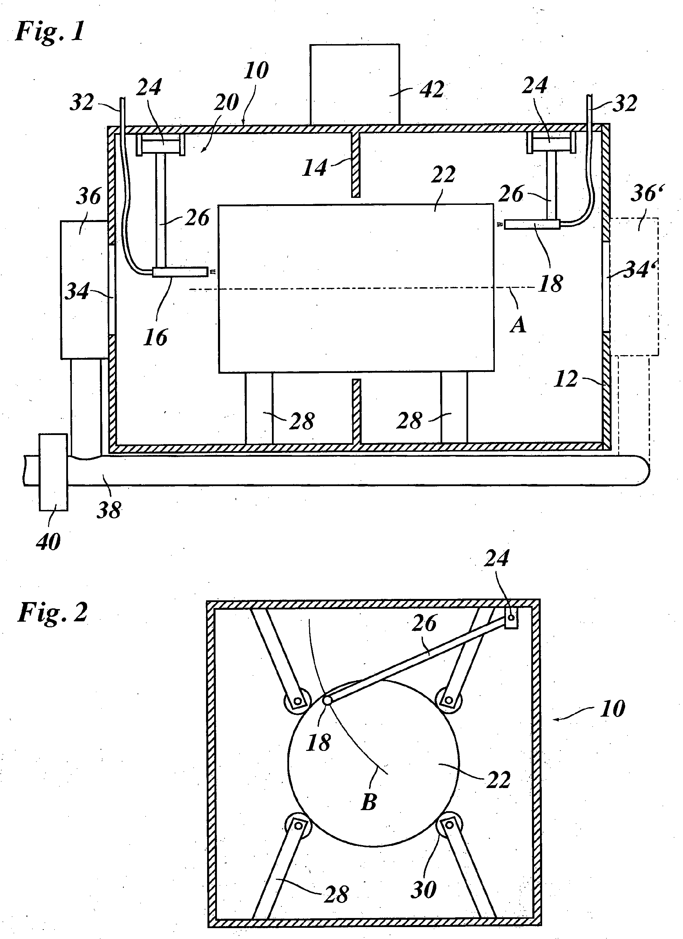

In Fig. 1 ist im Längsschnitt ein quaderförmiges Gehäuse 10 gezeigt, das an einem Ende eine Klappe 12 aufweist und innen durch eine Trennwand 14 in zwei Abteile unterteilt ist. Im Inneren des Gehäuses 10 sind im gezeigten Beispiel zwei Strahldüsen 16, 18 und ein Manipulatorsystem 20 angeordnet, das es erlaubt, einen Filter 22 von allgemein zylindrischer Form, beispielsweise einen Keramikfilter mit geschlossener Mantelfläche, zu halten und den Filter und die Strahldüsen relativ zueinander zu bewegen. Das Manipulatorsystem 20 umfasst Schwenkantriebe 24 für die an schwenkbaren Armen 26 gehaltenen Strahldüsen 16 und 18.

Der Filter 22 ist auf zwei Sätzen von Lagerböcken 28 so abgestützt, dass jedes Ende des Filters in einem der Abteile des Gehäuses liegt. Wie Fig. 2 zeigt, umfasst jeder Satz vier schwenkbare oder ausfahrbare und zurückziehbare Lagerböcke 28, die jeweils am freien Ende eine Rolle 30 tragen. Die Rollen 30 liegen an der Mantelfläche des zylindrischen Filters 22 an und halten so den Filter 22 stabil in seiner Position. Mindestens eine der Rollen 30 ist drehantreibbar, so dass ein Drehantrieb gebildet wird, der Teil des Manipulatorsystems 20 ist und mit dem sich der Filter 22 um seine Längsachse A (Fig. 1) drehen lässt.

Die Strahldüsen 16 und 18 sind auf die entgegengesetzten Stirnflächen des zylindrischen Filters 22 gerichtet. Wie Fig. 2 zeigt, lassen sich die Arme 26 mit Hilfe der Schwenkantriebe 24 so verschwenken, dass sich die Strahldüse (z. B. die Strahldüse 18 in Fig. 2) so auf einem Kreisbogen B bewegt, dass die Radialposition der Strahldüse variiert werden kann. Im gezeigten Beispiel geht der Kreisbogen B durch die Achse A des Filters, so dass auch der Mittelpunkt der Stirnfläche des Filters 22 erreicht werden kann. Durch Kombination der Schwenkbewegungen der Arme 24 mit der Drehung des Filters 22 lassen sich die gesamten Stirnflächen des Filters 22 abstrahlen.

Zur Anpassung an Filter mit unterschiedlichen Abmessungen können erforderlichenfalls die Axialpositionen der Strahldüsen 16 und 18 motorisch oder von Hand verstellbar sein.

Die Strahldüsen 16 und 18 sind jeweils als Laval-Düsen ausgebildet und über flexible Leitungen 32 mit einer nicht gezeigten, außerhalb des Gehäuses 10 angeordneten Druckluftquelle und einer Quelle für flüssiges CO₂ verbunden. Die Strahldüsen sind beispielsweise so aufgebaut, wie in EP 1 501 655 B beschrieben wird. Das flüssige CO₂ wird in der Strahldüse in einem Entspannungsraum entspannt, so dass ein Teil des CO₂ verdampft und die entstehende Verdunstungskälte dazu führt, dass ein anderer Teil des CO₂ zu Trockenschneepartikeln auskondensiert. Diese werden dann von der Druckluftströmung zur Laval-Düse mitgenommen, wo die Druckluft und die CO₂-Partikel auf Überschallgeschwindigkeit beschleunigt werden. Auf diese Weise wird ein energiereicher Strahl erzeugt, der auf die Oberfläche des Filters 22 trifft und tief in die dort vorhandenen Poren und/oder Kanäle eindringt. Die CO₂-Partikel entfalten dabei nicht nur eine mechanische Wirkung, sondern führen auch zu einer starken Abkühlung des Filtermaterials und damit zu einer Versprödung, die die Ablösung der Verunreinigungen begünstigt. Schließlich verdampfen die Partikel wieder zu gasförmigem CO₂, das zusammen mit der Druckluft für den Abtransport der abgelösten Verunreinigungen sorgt.

In der Klappe 12 und in der gegenüberliegenden Wand des Gehäuses 10 sind Saugöffnungen 34, 34' vorgesehen. In dem in Fig. 1 gezeigten Zustand ist eine Saugkammer 36, die über eine Saugleitung 38 und einen Staubabscheider 40 mit einem nicht gezeigten Sauggebläse verbunden ist, so vor die linke Saugöffnung 34 geschwenkt, dass Luft aus dem entsprechenden Abteil des Gehäuses abgesaugt wird. Durch die andere Saugöffnun 34' kann unterdessen Luft in das andere Abteil des Gehäuses eintreten. Die Trennwand 14 zwingt diese Luft, durch den Filter 22 zu strömen.

Wenn mit der oben beschriebenen Vorrichtung ein Filter 22 gereinigt werden soll, so wird zunächst die Klappe 12 geöffnet, und der Filter 22 wird in der in Fig. 1 gezeigten Position eingespannt. Die Arme 26 sind dabei in eine Position geschwenkt, in der sie flach unter der Decke des Gehäuses 10 liegen, so dass sie beim Einführen des Filters nicht im Weg sind. Anschließend wird die Klappe 12 geschlossen, die Saugkammer 36 wird vor die Saugöffnung 34 geschwenkt, und die Strahldüse 18, das Manipulatorsystem 20 und die Absaugung werden in Betrieb gesetzt. Auf diese Weise wird zunächst die rechte Stirnfläche des Filters 22 gereinigt. Dabei wird das Gehäuse und insbesondere der Filter 22 von einem Luftstrom durchspült, der die gleiche Richtung hat wie der von der Strahldüse 18 abgegebene Strahl, und die vom Filter 22 abgelösten Verunreinigungen werden zusammen mit dem gasförmigen CO₂ aus dem Inneren des Gehäuses abgesaugt. Die Verunreinigungen werden in dem Staubabscheider 40 abgeschieden und gesammelt. Das vom Sauggebläse abgesaugte Gemisch aus Luft und CO₂ kann bedenkenlos in die Umgebung entlassen werden.

Anschließend wird eine gleichfalls an die Saugleitung 38 angeschlossene Saugkammer 36' vor die Saugöffnung 34' geschwenkt, während die Saugkammer 36 von der Saugöffnung 24 weg geschwenkt wird, so das die Luft nun in entgegengesetzter Richtung durch den Filter 22 strömt. Mit Hilfe des Manipulatorsystems 20 wird nun die Strahldüse 16 über die linke Stirnfläche des Filters bewegt, um auch diese zu reinigen.

Das Manipulatorsystem und gegebenenfalls auch die Zufuhrsysteme für Druckluft und CO₂ zu den Strahldüsen sind mit einer programmierbaren elektronischen Steuereinrichtung 42 verbunden, die die Bewegungsabläufe, im gezeigten Beispiel also die Drehung des Filters 22 um die Achse A und die Bewegungen der Strahldüsen 16, 18 in der gewünschten Weise steuert. Gegebenenfalls werden mit Hilfe der Steuereinrichtung 42 auch die Strahldüsen nach Bedarf an- und abgeschaltet. Auch das Sauggebläse kann durch die Steuereinrichtung 42 so angesteuert werden, dass die Absaugung immer dann erfolgt, wenn die Strahldüsen in Betrieb sind. Zur Vermeidung von Rückverschmutzungen auf dem Filter sollte die Absaugung auf einen Luftwechsel ausgelegt sein, der pro Minute mindestens dem 3 - fachen, vorzugsweise mindestens dem 10-fachen, weiter vorzugsweise mindestens dem 100-fachen des Volumens des Filters 22 entspricht.

In der Steuereinrichtung 42 können verschiedene Programme für unterschiedliche Typen und/oder unterschiedliche Abmessungen der Filter 22 gespeichert sein. So braucht der Benutzer lediglich an einer Bedienungskonsole der Steuereinrichtung 44 den Typ und/oder die Abmessungen des zu reinigenden Filters eingeben, und der gesamte Reinigungsvorgang läuft dann automatisch ab. Auch die Geschwindigkeit, mit der sich die Strahldüsen 16, 18 relativ zum Filter 22 bewegen, kann mit Hilfe der Steuereinrichtung 42 variiert werden, so dass sich die Intensität und Dauer des Reinigungsvorgangs an den jeweiligen Verschmutzungsgrad und/oder die Materialbeschaffenheit des Filters anpassen lässt.

In einer anderen Ausführungsform können die Strahldüse 16 und die Saugkammer 36' fortgelassen sein. Nachdem die rechte Stirnseite des Filters gereinigt worden ist, wird die Klappe 12 vorübergehend geöffnet, und der Filter 20 wird umgedreht, so dass dann seine andere Stirnfläche mit der Strahldüse 18 gereinigt werden kann.

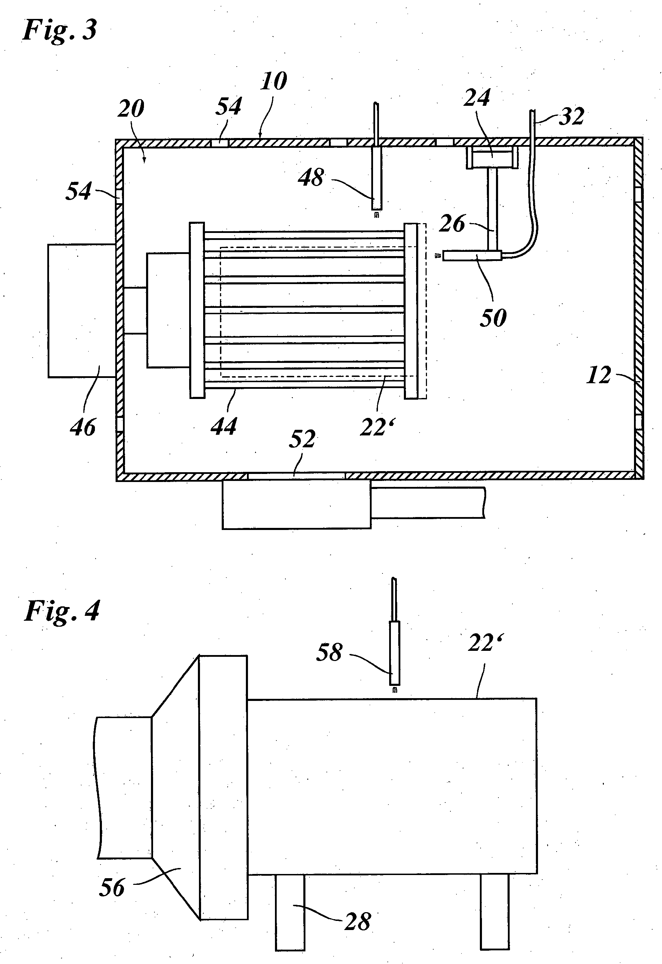

In Fig. 3 ist ein abgewandeltes Ausführungsbeispiel der erfindungsgemäßen Vorrichtung dargestellt, mit dem beispielsweise Edelstahlfilter 22' gereinigt werden können, die eine durchbrochene Mantelfläche haben. Das Manipulatorsystem 20 weist in diesem Fall einen Korb 44 auf, an den der Filter mit einem Ende so angeflanscht werden kann, dass er in dem Korb aufgenommen und gehalten ist. Ein Antrieb 46 erlaubt es, den Korb 44 und damit den Filter 22' um seine Längsachse zu drehen und in axialer Richtung zu verschieben.

Eine ortsfeste Strahldüse 48 strahlt durch die Wand des Korbes 44 hindurch auf die Mantelfläche des Filters, um diese zu reinigen. Für den Fall, dass auch eine Stirnfläche des Filters 22' gereinigt werden muss, ist hier an dem Ende, das dem Antrieb 46 gegenüber liegt, eine schwenkbare Strahldüse 50 vorgesehen, die wie die Strahldüse 18 in Fig. 1 arbeitet und vor die Stirnfläche des Filters geschwenkt wird, während der Korb 44 in seiner am weitesten rechts gelegenen Position gehalten wird.

Eine Saugöffnung 52 ist in diesem Fall in den Boden des Gehäuses 10 integriert und an ein zugehöriges Absaugsystem angeschlossen. In den Wänden des Gehäuses 10 sind Zuluftöffnungen 54 vorgesehen.

Fig. 4 zeigt eine Ausführungsform, bei der der Filter 22' ähnlich wie in Fig. 1 auf Lagerböcken 28 gelagert ist und mit einer Stirnfläche direkt an eine Saugöffnung 56 einer Absaugeinrichtung angesetzt ist, so dass die Luft unmittelbar aus dem Inneren des Filters abgesaugt werden kann. Eine Strahldüse 58 wird in diesem Fall beispielsweise mit Hilfe eines Roboterarms bewegt, um die Umfangsfläche und die andere Stirnfläche des Filters abzustrahlen.

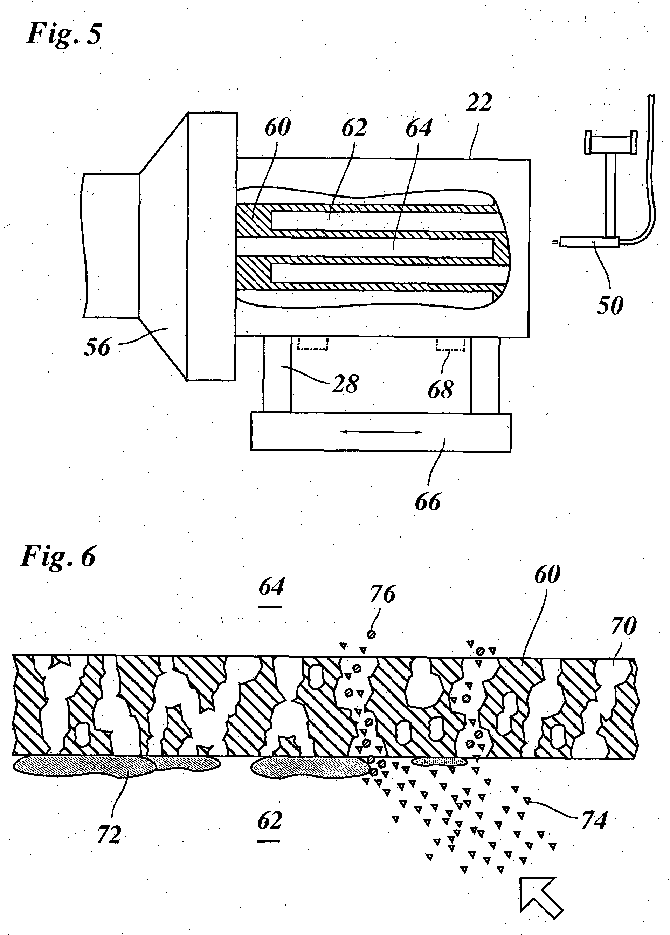

Fig. 5 zeigt eine Ausführungsform, die der Ausführungsform nach Fig. 4 ähnelt, jedoch speziell für den Fall vorgesehen ist, dass es sich bei dem Filter 22 um einen Keramikfilter handelt. Der Filter besteht in der Hauptsache aus einem porösen Keramikmaterial 60, in das Bohrungen 62, 64 so von den entgegengesetzten Stirnseiten des Filters eintreten, dass sie im Inneren des Filters kammförmig ineinandergreifen und nur durch relativ dünne Wände des Keramikmaterials 60 voneinander getrennt sind.

Mit der Düse 50, die bereits im Zusammenhang mit Fig. 5 beschrieben wurde, werden Druckluft und Strahlmittel von einer Stirnseite des Filters her in die Bohrungen 62 eingeblasen. Die Saugöffnung 56 ist an die entgegengesetzte Stirnfläche des Filters angesetzt und erzeugt dort einen Unterdruck von wenigstens 1 kPa, vorzugsweise wenigstens 10 kPa, weiter vorzugsweise 50 kPa oder mehr, so dass das Strahlmittel und die vom Filter abgelösten Verunreinigungen wirksam durch die Bohrungen 64 abgesaugt werden.

Die Lagerböcke 28 sind auf einem Wagen 66 angeordnet, der in Axialrichtung des Filters 22 verfahrbar ist. Wenn die Düse 50 eine Schwenkbewegung über die Stirnfläche des Filters ausgeführt hat, wird der Wagen 66 zurückgefahren, so dass der Filter 22 von der Saugdüse 56 freikommt und dann um seine Längsachse gedreht werden kann. Erforderlichenfalls kann der Filter 22 mit über den Umfang des Filters geführten Zugbändern drehbar aber axialfest auf den Lagerböcken 28 fixiert sein. Nachdem der Filter um einen bestimmten Winkel gedreht wurde, wird er wieder gegen die Saugöffnung gefahren, und die Düse 50 wird erneut in Betrieb gesetzt. Auf diese Weise kann schrittweise die gesamte Stirnfläche des Filters 22 mit der Düse 50 überstrichen werden. Anschließend wird der Filter mit einem Handhabungssystem, das beispielsweise zwei parallele Arme 68 aufweist und wie ein Gabelstapler arbeitet, von den Lagerböcken 28 abgehoben und in der Richtung senkrecht zur Zeichenebene in Fig. 5 aus der Vorrichtung herausgefahren. Der Filter wird dann gedreht und in entgegengesetzter Orientierung erneut in die Vorrichtung eingefahren, so dass auch die entgegengesetzte Stirnfläche in entsprechender Weise abgereinigt werden kann.

In Fig. 6 ist schematisch ein vergrößerter Schnitt durch das Keramikmaterial 60 gezeigt, das eine der Bohrungen 62 von einer benachbarten Bohrung 64 trennt. Das Filtermaterial hat eine offenzellige Porenstruktur mit Poren 70, die von der Bohrung 62 zur Bohrung 64 durchgehen. Der Porendurchmesser liegt z. B. in der Größenordnung von etwa 1 µm, so dass Partikel mit einem Durchmesser von mehr als 1 µm von dem Filter zurückgehalten werden. Die zurückgehaltenen Verunreinigungen bilden an den Wänden der Bohrung 62 einen Belag 72, der einen Teil der Poren 70 verstopft.

Das von der Düse 50 ausgestoßene Strahlmittel besteht im gezeigten Beispiel aus Partikeln 74 aus Trockenschnee, die entweder durch Entspannung von flüssigem CO₂ oder durch Zerkleinern von festem CO₂ erzeugt wurden. Die Partikel 74 werden von der Düse 50 mit zumindest nahezu Schallgeschwindigkeit in die Bohrung 64 eingeblasen und treffen mit hoher Geschwindigkeit auf die Wände dieser Bohrung, wie in Fig. 6 durch einen Pfeil angedeutet wird. Durch die auftreffenden Partikel 74 des Strahlmittels wird der Belag 72 zerkleinert, und es entstehen kleine Bruchstücke 76, die aufgrund des in der Bohrung 64 herrschenden Unterdruckes durch die Poren 70 hindurch abgesaugt werden oder mit der in der Bohrung verwirbelten Druckluft zur offenen Seite der Bohrung ausgeworfen werden. Auch die Partikel 74 des Strahlmittels sind kleiner als die Poren 70, so dass sie ebenfalls durch diese Poren hindurch abgesaugt werden können, und zwar mit einem hinreichend hohen Materialdurchsatz, so dass das über die Düse 50 zugeführte Strahlmittel sich nicht in der Bohrung 62 sammelt und diese verstopft. Gegebenenfalls können die Partikel 74 zunächst auch einen Durchmesser haben, der größer ist als der Porendurchmesser. Da die Trockenschnee-Partikel beim Auftreffen auf das Filtermaterial 60 zum Teil zerschlagen werden und zum Teil auch erwärmt werden und sublimieren, nimmt der Partikeldurchmesser so weit ab und/oder die Partikel werden so verformt, dass sie durch die Poren hindurchtreten können. Gegebenenfalls können die Partikel auch vollständig verdampfen. Das auf diese Weise entstehende gasförmige CO₂ trägt dazu bei, die Bruchstücke 76 des Belages 72 aus den Poren 70 auszuspülen. Auf diese Weise kann eine nachhaltige und dennoch schonende Reinigung des Filters 20 erreicht werden.

## Patentansprüche

1. Verfahren zum Reinigen von Filtern (22; 22'), die als Festkörper mit Poren (70) und optional zur Oberfläche offenen Kanälen ausgebildet sind, durch Abstrahlen mit einem gasförmigen Strahlmedium, wobei der Filter (22; 22') beim Abstrahlen vor einer Saugöffnung (34, 34'; 52, 56) angeordnet wird, die das Strahlmedium sowie Umgebungsluft ansaugt, **dadurch gekennzeichnet, dass**
- das Strahlmedium Trockenschnee als Strahlmittel (74) enthält,
- das Strahlmedium in einer Strahldüse (16, 18; 48; 50; 58) so beschleunigt wird, dass es mit mindestens annähernd Schallgeschwindigkeit auf den Filter (22; 22') trifft,
- der Volumendurchsatz durch die Saugöffnung (34, 34'; 52; 56) pro Minute mindestens dem zehnfachen Volumen des Filters (22; 22') entspricht,
- wobei das Strahlmittel (74) porengängig gemacht ist derart, dass es beim Auftreffen auf das Filtermaterial schnell verdampft oder sublimiert und dann durch die Poren abgesaugt werden kann, und/oder derart, dass die Partikel des Strahlmittels (74) so klein sind oder durch Verdampfen oder Sublimieren so klein werden, dass sie durch die Poren hindurchgehen.

2. Verfahren nach Anspruch 1, bei dem der Filter (22, 22') unmittelbar an die Saugöffnung (56) angeschlossen ist.

## Claims

1. Method for cleaning filters (22; 22'), which are in the form of solid bodies having pores (70) and optionally having ducts open to the surface, by blasting with a gaseous blasting medium, the filter (22; 22') being arranged upstream from a suction opening (34, 34'; 52, 56), which sucks in the blasting medium and ambient air, during the blasting,
**characterised in that**
- the blasting medium contains dry snow as a blasting agent (74),
- the blasting medium is accelerated in a blasting nozzle (16, 18; 48; 50; 58), in such a way that it strikes the filter (22; 22') at at least approximately the speed of sound,
- the volumetric flow rate through the suction opening (34, 34'; 52; 56) per minute corresponds to at least ten times the volume of the filter (22; 22'),
- the blasting medium (74) being made able to penetrate the pores, in such a way that upon striking the filter material it can be rapidly evaporated or sublimated and subsequently sucked up through the pores and/or in such a way that the particles of the blasting medium (74) are so small or become so small as a result of evaporation or sublimation that they pass through the pores.

2. Method according to claim 1, wherein the filter (22, 22') is directly attached to the suction opening (56).

## Revendications

1. Procédé destiné à nettoyer des filtres (22 ; 22'), qui sont réalisés comme corps solides munis de pores (70) et, en option, de canaux ouverts vers la surface, par projection par jet à l'aide d'un milieu de projection gazeux, dans lequel procédé le filtre (22 ; 22') lors de la projection par jet est disposé devant une ouverture d'aspiration (34, 34' ; 52, 56) qui aspire le milieu de projection ainsi que l'air ambiant,
**caractérisé en ce que**
- le milieu de projection contient de la neige carbonique en tant que moyen de projection par jet (74),
- **en ce que** le milieu de projection est accéléré dans une buse à jet (16, 18 ; 48 ; 50; 58) de manière à ce qu'il arrive sur le filtre (22 ; 22') avec au moins approximativement la vitesse du son,
- **en ce que** le débit volumétrique à travers l'ouverture d'aspiration (34, 34' ; 52; 56) par minute correspond au moins à dix fois le volume du filtre (22 ; 22'),
- le moyen de projection (74) étant rendu apte à traverser les pores, de manière à ce que lors de l'impact sur le matériau du filtre, il s'évapore rapidement ou soit sublimé et puisse être ensuite aspiré à travers les pores, et/ou de manière à ce que les particules du moyen de projection (74) soient si petites ou qu'elles deviennent si petites en raison de l'évaporation ou de la sublimation qu'elles passent à travers les pores.

2. Procédé selon la revendication 1, dans lequel le filtre (22, 22') est directement raccordé à l'ouverture d'aspiration (56).
